## Europäisches Patentamt

## European Patent Office

## Office européen des brevets

(19)

(11) Veröffentlichungsnummer: **0 023 605**
**B1**

(12) # EUROPÄISCHE PATENTSCHRIFT

(45) Veröffentlichungstag der Patentschrift:
**11.07.84**

(21) Anmeldenummer: **80103984.3**

(22) Anmeldetag: **10.07.80**

(51) Int. Cl.³: **H 04 B 7/26**, H 04 B 3/20

(54) **Funksystem.**

(30) Priorität: **31.07.79 DE 2931084**

(43) Veröffentlichungstag der Anmeldung:
**11.02.81 Patentblatt 81/6**

(45) Bekanntmachung des Hinweises auf die Patenterteilung:
**11.07.84 Patentblatt 84/28**

(84) Benannte Vertragsstaaten:
**AT BE CH DE FR GB IT LI LU NL SE**

(56) Entgegenhaltungen:
**DE - A - 2 644 206**
**DE - A - 2 707 091**
**DE - B - 1 101 540**
**US - A - 2 597 818**
**US - A - 2 927 321**

(73) Patentinhaber: **SIEMENS AKTIENGESELLSCHAFT,**
**Berlin und München Wittelsbacherplatz 2,**
**D-8000 München 2 (DE)**

(72) Erfinder: **Kloeber, Peter, Dipl.-Ing.,**
**Wilhelm-Busch-Strasse 30, D-8000 München 71 (DE)**
Erfinder: **Schröter, Heinz, Dipl.-Ing.,**
**Peter-Vischer-Strasse 19, D-8000 München 60 (DE)**

## Beschreibung

Die Erfindung bezieht sich auf ein Funksystem zur Nachrichtenübertragung zwischen sich längs vorgegebener Strecken bewegenden Sende-Empfangsstationen und längs dieser Strecken in vorgegebenen Abständen angeordneten, in beiden Streckenrichtungen wirksamen ortsfesten Sende-Empfangsstationen, bei dem die ortsfesten Stationen einer Strecke über ein Kabel mit einer zentralen Sende-Empfangsstation in Verbindung stehen.

Ein solches Funksystem ist durch die DE-OS 2 644 206 bekannt. Dabei sind die ortsfesten Sende-Empfangsstationen in Übertragungsabschnitte zusammengefasst, innerhalb derer alle Sende-Empfangsstationen jeweils auf derselben Frequenz senden und im Falle von Vollduplexverkehr auf einer anderen Frequenz empfangen.

Ferner ist durch die US-A-2 597 818 ein solches Funksystem zur Nachrichtenübertragung bekannt, bei dem eine Zentralstation und ortsfeste Stationen über eine Drahtleitung miteinander verbunden sind. Dieses System ist so ausgebildet, dass zur Vermeidung möglicher Störungen durch verschiedene Stationen nicht mehrere Stationen zur gleichen Zeit tätig sein können. Wenn also beispielsweise gerade eine erste Station zur Zentralstation sendet, können andere Stationen nicht starten. Somit werden Interferenzen von anderen Fahrzeugen, die ebenfalls eine Nachricht zur Zentrale senden wollen, verhindert.

Üblicherweise wird die von einer bewegten Sende-Empfangsstation gesendete Nachricht von mehreren ortsfesten Sende-Empfangsstationen empfangen. Es muss nun dafür gesorgt werden, dass entweder nur die pegelmässig beste Nachricht zur zentralen Sende-Empfangsstation übertragen bzw. von ihr ausgewertet wird oder dass bei einer Überlagerung der einzelnen Nachrichtensignale von den verschiedenen Sende-Empfangsstationen, die zusammen mit nur einer Leitung an die zentrale Sende-Empfangsstation angeschlossen sind, Verzerrungen des Summennachrichtensignals in der zentralen Sende-Empfangsstation möglichst klein gehalten werden. Solche Verzerrungen können beispielsweise als Phasenfehler durch unterschiedliche Signallaufzeiten auf dem Kabel oder in der Amplitude durch die zufallsartige Addition der Signale der gerade empfangenden Sende-Empfangsstationen auftreten.

Der Erfindung liegt die Aufgabe zugrunde, eine Lösung anzugeben, mit der auf einfache Weise eine verzerrungsfreie, exakte Nachrichtenübertragung, insbesondere binärer Daten, von den einzelnen Sende-Empfangsstationen zur zentralen Sende-Empfangsstation gewährleistet ist.

Bei einem Funksystem der eingangs beschriebenen Art wird diese Aufgabe gemäss der Erfindung in der Weise gelöst, dass

a) an dem von der zentralen Sende-Empfangsstation entferntesten Ende des Kabels ein Trägersignalgenerator angeschaltet ist,

b) an den für die Einspeisung von Signalen vorgesehenen, von den ortsfesten Sende-Empfangsstationen gebildeten Stellen längs des Kabels jeweils über einen Übertrager mit hohem Übersetzungsverhältnis ein Amplitudenmodulator parallel angeschlossen ist,

c) in der zentralen Sende-Empfangsstation am Ende des Kabels ein Demodulator mit Schwellwertschaltung und gegebenenfalls ein dem Demodulator vorgeschalteter Verstärker eingeschaltet sind und

d) in den ortsfesten Sende-Empfangsstationen Zeitverzögerungsglieder eingeschaltet sind, deren Verzögerungszeit mit zunehmender Nähe der ortsfesten Sende-Empfangsstationen zur zentralen Sende-Empfangsstation derart zunimmt, dass die Signale aller ortsfesten Sende-Empfangsstationen gleichzeitig in der zentralen Sende-Empfangsstation eintreffen.

Vorteilhafte Ausgestaltungen und Weiterbildungen des Erfindungsgegenstandes sind in den Unteransprüchen angegeben.

Nachstehend wird die Erfindung anhand eines in der Zeichnung dargestellten Ausführungsbeispieles näher erläutert.

Es zeigen

Fig. 1 in einem Blockschaltbild die Einrichtungen für die Nachrichtenübertragung auf dem Kabel,

Fig. 2 das Schaltbild eines Modulators und Übertragers im Bereich einer ortsfesten Sende-Empfangsstation und

Fig. 3 eine schematische Darstellung eines Funksystems mit den Einrichtungen für die Nachrichtenübertragung.

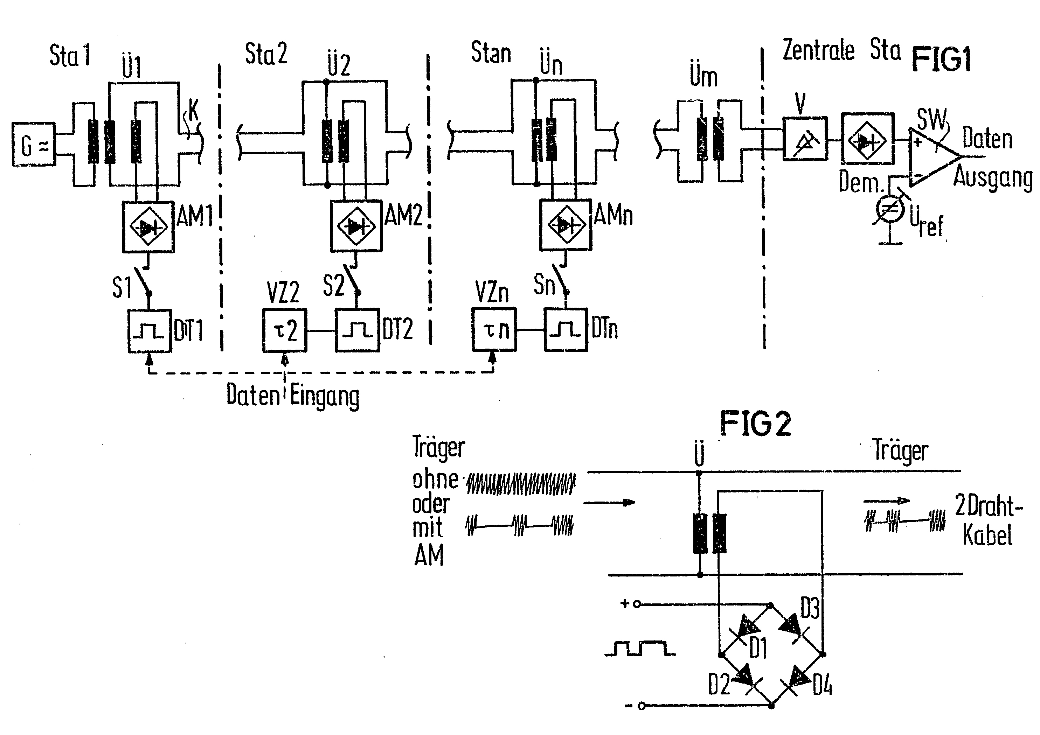

Im Blockschaltbild nach Fig. 1 sind zwischen den strichpunktierten Linien die Kabelabschnitte im Bereich der einzelnen ortsfesten Sende-Empfangsstation Sta1, Sta2 ...Stan und die zugehörigen Modulationseinrichtungen für die Kabelübertragung von Daten mehrerer in Serie liegender, beliebig ab- oder zugeschalteter Stationen mit identischer Information zu einer zentralen Station dargestellt. Dabei enthält jede ortsfeste Station, d.h. jede mögliche Einspeisestelle für eine an die zentrale Sende-Empfangsstation zu übertragende binäre Nachricht einen Amplitudenmodulator AM1, AM2 ... AMn, die jeweils über einen Übertrager Ü1, Ü2 ... Ün mit hohem Übersetzungsverhältnis (ü ≥ 5) parallel an das Kabel K angeschlossen sind. An dem der zentralen Sende-Empfangsstation entferntesten Ende des Kabels K, hierbei also in der ersten ortsfesten Sende-Empfangsstation Sta1, ist ein Trägerfrequenzgenerator G eingeschaltet, der die erforderliche Trägerfrequenz für die Nachrichtenübertragung erzeugt.

Durch die symbolischen Schalter S1, S2 ... Sn werden die Amplitudenmodulatoren AM1, AM2, AMn, je nachdem, ob die einzelnen ortsfesten Sende-Empfangsstationen empfangen oder nicht, von den Datentreibern DT1, DT2 ... DTn angesteuert. den Datentreibern sind ab der zweiten ortsfesten Sende-Empfangsstation jeweils Verzögerungsglieder VZ2 ... VZn vorgeschaltet, die

unterschiedliche Verzögerungszeiten $\tau_2 \ldots \tau_n$ aufweisen. Dabei verzögern die der zentralen Sende-Empfangsstation näherliegenden Sende-Empfangsstationen ihre Signale mehr als die weiter entfernt liegenden. Auf diese Weise werden die unterschiedlichen Laufzeiten der Nachrichtensignale auf dem Kabel zwischen den einzelnen ortsfesten Sende-Empfangsstationen Sta1, Sta2 ... Stan, deren Dateneingänge parallel geschaltet sind, und der zentralen Sende-Empfangsstation an den einzelnen Sende-Empfangsstationen ausgeglichen.

Ein Signal einer beweglichen Sende-Empfangsstation, das von den einzelnen ortsfesten Sende-Empfangsstationen zeitversetzt empfangen wird, gelangt über das Kabel von den einzelnen ortsfesten Sende-Empfangsstationen gleichzeitig zur zentralen Sende-Empfangsstation.

In der zentralen Sende-Empfangsstation, an deren Eingang ein Übertrager Üm im Kabel liegt, sind ein Verstärker V, ein Demodulator Dem und eine Schwellwertschaltung SW hintereinandergeschaltet. Die Schwellwertschaltung besitzt zwei Eingänge, von denen der eine mit dem Ausgang des Demodulators Dem verbunden ist und der andere mit einer Referenzspannungsquelle $U_{ref}$. Der Ausgang der Schwellwertschaltung SW bildet den Datenausgang des Übertragungsweges.

Fig. 2 zeigt das Schaltbild eines Modulators und dessen Anschaltung an den Übertragungsweg. Der Modulator ist in Brückenschaltung mit vier Dioden D1, D2, D3, D4 aufgebaut. An den Anschlüssen der einen Diagonale, deren dazwischenliegende Zweige die Dioden D1 und D2 bzw. D3 und D4 mit gleicher Polung in Serie geschaltet enthalten, werden die binären Daten angelegt. In der zweiten Diagonalen der Brückenschaltung ist die Sekundärwicklung des Übertragers Ü eingeschaltet, dessen Primärwicklung zwischen die beiden Drähte des Zwei-Draht-Kabels eingeschaltet ist. Das ankommende Trägersignal ist unmoduliert oder bereits amplitudenmoduliert, je nachdem, ob die dargestellte Station die erste, an dem den Trägersignalgenerator enthaltenden Ende des Kabels liegende Station ist oder sich näher an der zentralen Sende-Empfangsstation befindet.

Die Wirkungsweise der vorstehend beschriebenen Kabelübertragung ist folgende: Im Trägerfrequenzgenerator G wird der Träger erzeugt, der über das Kabel gesendet und in den einzelnen Stationen fast 100% amplitudenmoduliert wird. Dieser Modulation liegt das Prinzip zugrunde, dass die Übertrager sekundärseitig im Takt der Nachricht einen Kurzschluss des Kabels erzeugen. Beim Anlegen einer positiven Spannung («1») am Dateneingang werden die entsprechend gepolten Dioden des Modulators durchgeschaltet und schliessen dadurch die Primärwicklung des betreffenden Übertragers kurz. Dieser Kurzschluss für das Trägersignal transformiert sich auf die Sekundärseite des Übertragers, und es entsteht eine fast 100prozentige Amplitudenmodulation. Die dabei verwendeten Ferritkern-Übertrager besitzen einen Hochpasscharakter, so dass das niederfrequente Datensignal nicht auf das Kabel übertragen wird.

In der zentralen Sende-Empfangsstation am Ende eines Kabels wird der Pegel des ankommenden amplitudenmodulierten Nachrichtensignals im Verstärker V angehoben und über einen Demodulator Dem mit Schwellwertschaltung SW die binäre Nachricht wiedergewonnen. Die binäre Nachricht einer oder mehrerer Sende-Empfangsstationen, die einen Gleichstromanteil besitzen kann, wird hierbei also mittels einer 100% amplitudenmodulierten Trägerfrequenz auf nur zwei Adern einer Signalleitung übertragen. Weder in den ortsfesten noch in der zentralen Sende-Empfangsstation werden Schaltungen zur Auswahl des nachrichtenmässig besten Signals bzw. der Leitung benötigt, da eine, mehrere oder alle Sende-Empfangseinrichtungen, je nachdem, ob sie gerade Nachrichten empfangen, gleichzeitig auf die eine Leitung einwirken können.

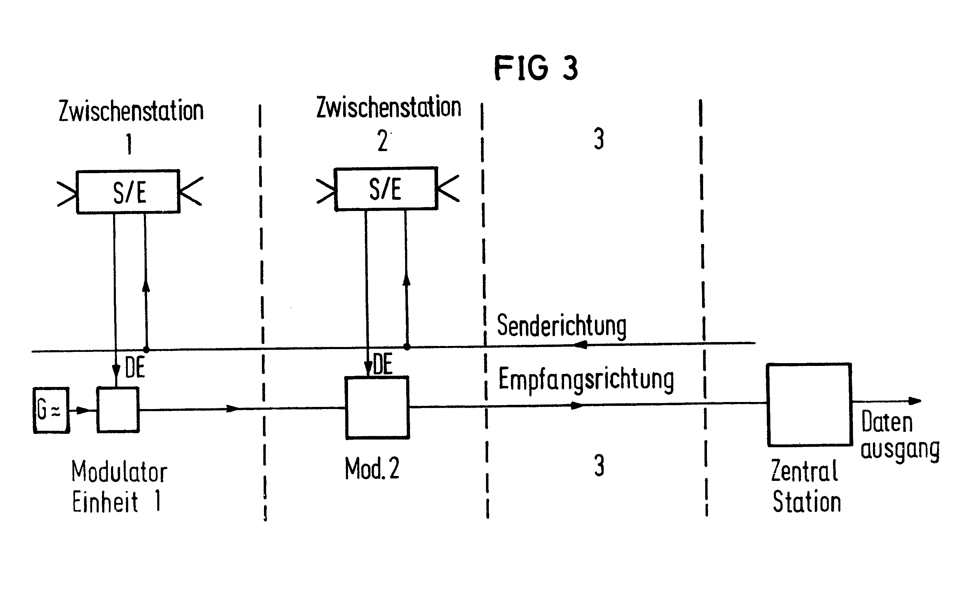

Fig. 3 zeigt eine schematische Darstellung eines Funksystems mit den Einrichtungen für die Nachrichtenübertragung. Längs der Strecke sind in vorgegebenen Abständen in beiden Streckenrichtungen wirksame ortsfeste Sende-/Empfangsstationen S/E (Zwischenstationen 1, 2, 3 ...) angeordnet, die über Kabel K mit der Zentralstation verbunden sind. Dabei enthält jede ortsfeste Sende-/Empfangsstation, d.h. jede mögliche Einspeisestelle für eine an die zentrale Sende-/Empfangsstation (Zentralstation) zu übertragende binäre Nachricht eine Modulationseinheit der in Fig. 2 dargestellten Art, auf deren Dateneingang DE die Empfangsdaten gelangen. An dem der zentralen Station entferntesten Ende des Kabels K, hierbei also in der ersten ortsfesten Sende-/Empfangsstation (Zwischenstation 1) ist der Trägerfrequenzgenerator G eingeschaltet.

**Patentansprüche**

1. Funksystem zur Nachrichtenüberwachung zwischen sich längs vorgegebener Strecken bewegenden Sende-Empfangsstationen und längs dieser Strecken in vorgegebenen Abständen angeordneten, in beiden Streckenrichtungen wirksamen ortsfesten Sende-Empfangsstationen (Sta1, Sta2 ... Stan), bei dem die ortsfesten Stationen einer Strecke über ein Kabel (K) mit einer zentralen Sende-Empfangsstation (Zentrale Sta) in Verbindung stehen, dadurch gekennzeichnet, dass

a) an dem von der zentralen Sende-Empfangsstation (Zentrale Sta) entferntesten Ende des Kabels (K) ein Trägersignalgenerator (G) angeschaltet ist,

b) an den für die Einspeisung von Signalen (Nachrichten) vorgesehenen, von den ortsfesten Sende-Empfangsstationen (Sta1, Sta2 ... Stan) gebildeten Stellen längs des Kabels (K) jeweils über einen Übertrager (Ü1, Ü2 ... Ün) mit hohem Übersetzungsverhältnis ein Amplitudenmodulator (AM1, AM2 ... Amn) parallel angeschlossen ist,

c) in der zentralen Sende-Empfangsstation am Ende des Kabels (K) ein Demodulator (Dem) mit Schwellwertschaltung (SW) und gegebenenfalls ein dem Demodulator (Dem) vorgeschalteter Verstärker (V) eingeschaltet sind und

d) in den ortsfesten Sende-Empfangsstationen (Sta1, Sta2 ... Stan) Zeitverzögerungsglieder (VZ2 ... VZn) eingeschaltet sind, deren Verzögerungszeit mit zunehmender Nähe der ortsfesten Sende-Empfangsstationen zur zentralen Sende-Empfangsstation derart zunimmt, dass die Signale aller ortsfesten Sende-Empfangsstationen gleichzeitig in der zentralen Sende-Empfangsstation eintreffen.

2. Funksystem nach Anspruch 1, dadurch gekennzeichnet, dass das Übersetzungsverhältnis ü der Übertrager (Ü1, Ü2 ... Ün) grösser 5 ist.

3. Funksystem nach Anspruch 1 oder 2, dadurch gekennzeichnet, dass die Modulatoren (AM1, AM2 ... Amn) aus einem Diodenquartett (D1, D2, D3, D4) in Brückenschaltung bestehen, an deren durch die gleichpoligen Diodenverbindungspunkte gebildeter Diagonalen das einzuspeisende Signal in Form einer binären Nachricht anliegt und in dessen andere Diagonale die Primärwicklung der Übertrager (Ü1, Ü2 ... Ün) eingeschaltet ist.

4. Funksystem nach einem der Ansprüche 1 bis 3, dadurch gekennzeichnet, dass das Kabel (K) aus einem Zwei-Draht-Kabel besteht.

## Claims

1. A wireless communication system for monitoring communications between transmitter/ receiver stations that move along predetermined paths and stationary transmitter/receiver stations (Sta1, Sta2 ... Stan) arranged along the paths at predetermined distances and are operative in both path directions, wherein the stationary stations of one path are connected to a central transmitter/receiver station (central Sta) by means of a cable (K), characterised in that

a) a carrier signal generator (G) is connected to the end of the cable (K) remote from the central transmitter/receiver station (central Sta),

b) a transformer (Ü1, Ü2 ... Ün) having a high transformation ratio connects an amplitude modulator (AM1, AM2 ... Amn) in parallel to the points along the cable (K) which are provided for the feeding of signals (communications) by the stationary transmitter/receiver stations (Sta1, Sta2 ... Stan),

c) in the central transmitter/receiver station, at the end of the cable (K), there are inserted a demodulator (Dem) having a threshold circuit (SW) and possibly an amplifier (V) preceding the demodulator (Dem), and

d) in the stationary transmitter/receiver stations (Sta1, Sta2 ... Stan), there are inserted time elements (VZ2 ... VZn) having a delay time which is greater the nearer the stationary transmitter/ receiver station is to the central transmitter/ receiver station in such a manner that the signals of all stationary transmitter/receiver stations arrive simultaneously in the central transmitter/ receiver station.

2. A wireless communication system as claimed in Claim 1, characterised in that the transformation ratio ü of the transformers (Ü1, Ü2 ... Ün) is greater than 5.

3. A wireless communication system as claimed in Claim 1 or 2, characterised in that the modulators (AM1, AM2 ... Amn) consist of a diode quartet (D1, D2, D3, D4) in a bridge circuit and the signal is fed in the form of a binary communication to the bridge diagonal between the junctions of like diode electrodes and the primary winding of the transformer (Ü1, Ü2 ... Ün) is inserted into the other diagonal.

4. A wireless communication system as claimed in Claim 1 to 3, characterised in that the cable (K) consists of a two-wire cable.

## Revendications

1. Système de radiocommunication pour le contrôle des communications entre des postes d'émission-réception se déplaçant le long de sections de voies prédéterminées et des postes d'émission-réception (Sta1, Sta2 ... Stan) fixes, disposés à des distances prédéterminées le long de ces sections et agissant dans les deux sens de celles-ci, dans lequel les postes fixes d'une section de voie sont en liaison par l'intermédiaire d'un câble (K) avec un poste central d'émission-réception (central Sta), caractérisé par le fait, que

a) à l'extrémité du câble (K) qui est la plus éloignée du poste central d'émission-réception (central Sta) est relié un générateur de signaux porteurs (G),

b) à chacun des emplacements, le long du câble (K), formés par les postes d'émitteur-récepteur fixes (Sta1, Sta2 ... Stan) et prévus pour la mémorisation de signaux (informations) est monté en parallèle, par l'intermédiaire d'un transformateur (Ü1, Ü2 ... Ün) à rapport de transformation élevé, un modulateur d'amplitude (AM1, AM2 ... Amn),

c) au poste central d'émission-réception, à l'extrémité du câble (K), sont branchés un démodulateur (Dem) à circuit à valeur de seuil (SW) et éventuellement un amplificateur (V) monté en amont du démodulateur (Dem), et

d) dans les postes fixes d'émission-réception (Sta1, Sta2 ... Stan) sont branchés des circuits à retard de temps (VZ2 ... VZn) dont la durée de retard croît de telle manière avec la proximité croissante des postes d'émission-réception fixes par rapport au poste central d'émission-réception, que les signaux de tous les postes d'émission-réception fixes atteignent simultanément le poste central d'émission-réception.

2. Système de radiocommunication selon la revendication 1, caractérisé par le fait que le rapport de transformation (ü) des transformateurs (Ü1, Ü2 ... Ün) est supérieur à 5.

3. Système de radiocommunication selon la revendication 1 ou 2, caractérisé par le fait que les modulateurs (AM1, AM2 ... Amn) sont constitués par un ensemble de quatre diodes (D1, D2, D3, D4) en montage en pont à la diagonale duquel, qui est formée par les points de liaison des diodes de même polarité, est présent le signal à mémoriser sous la forme d'une information binaire, alors que dans l'autre diagonale du pont est monté l'enroulement primaire des transformateurs (Ü1, Ü2 ... Ün).

4. Système de radiocommunication selon l'une des revendications 1 à 3, caractérisé par le fait que le câble (K) est constitué par un câble bifilaire.

Sta 1    Ü1        Sta 2    Ü2        Stan    Ün          Üm          Zentrale  Sta  **FIG1**

K

G ≈

AM1              AM2              AMn                    V    SW    Daten

S1                  VZ2    S2          VZn    Sn                        Dem.    Ausgang

DT1              τ2    DT2            τn    DTn                              U_ref

Daten Eingang

**FIG 2**

Träger          Ü                              Träger

ohne

oder                                                    2Draht-

mit                                                      Kabel

AM

D3

+                                      D1

D2                D4

0 023 605

**FIG 3**

Zwischenstation 1

S/E

Zwischenstation 2

S/E

3

Senderichtung

DE

Empfangsrichtung

G ≈

Modulator
Einheit 1

Mod. 2

3

Zentral
Station

Daten
ausgang

0 023 605